# EUROPÄISCHE PATENTSCHRIFT

(11) **EP 0 159 525 B1**
(45) Veröffentlichungstag und Bekanntmachung des Hinweises auf die Patenterteilung: **30.06.1993**
(21) Anmeldenummer: 85103050.2
(22) Anmeldetag: 16.03.1985
(51) Int. Cl.: B67D 1/12, G01F 1/06, G01F 15/14, G01F 15/18, B08B 9/06

(54) **Messgerät für Getränkeleitungen**
Metering device for beverage conduits
Dispositif de mesure pour tuyauteries de boissons

(30) Priorität: 20.03.1984 DE 8408445 U
(43) Veröffentlichungstag der Anmeldung: 30.10.1985
(73) Patentinhaber: Digmesa AG DigitaleMesstechnik, CH-2403 Biel (CH)
(72) Erfinder: Plüss, Heinz, CH-3322 Schönbühl (CH)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 3 104 134
- US-A- 3 937 362

## Beschreibung

Die Erfindung betrifft ein Meßgerät zum Einbau in Leitungen für Getränke, insbesondere für Bier, mit einem Meßgehäuse mit einem Einlaß und einem Auslaß für das Getränk, dessen Durchfluß zu messen ist, und mit einem Meßkörper in Form eines mittels zumindestens eines Steinlagers gelagerten Flügelrads.

Derartige Leitungen für Wein, Mineralwasser und auch Bier müssen in regelmäßigen Abständen ebenso wie in ihnen eingesetzte Meßgeräte, beispielsweise Durchflußmesser oder dergleichen, gereinigt werden. Bei einer Reihe von Getränken ist dies problemlos, hier kann durch die Leitung und die Meßgeräte eine Reinigungsflüssigkeit gedrückt werden, die Leitung und Meßgeräte reinigt. Ein Ausbauen des Meßgerätes erübrigt sich daher bei Leitungen für solche Getränke.

Bei anderen Getränken, insbesondere bei Bier treten Ablagerungen, wie Bierhefeablagerungen, auf, die nur mechanisch entfernt werden können. Zu diesem Zweck müssen kleine Schaumstoffkügelchen durch die Leitungen gepreßt werden. Derartige Kügelchen können aber nicht durch das Meßgerät gepreßt werden, sondern würden in diesem vielmehr blockiert. Es ist daher erforderlich, das Meßgerät auszubauen. Der Ausbau des Meßgerätes war bisher umständlich und aufwendig.

Aus der DE 31 04 134 A1 ist ein Durchflußmesser für Flüssigkeiten mit einem Flüssigkeitseinlaß- und -auslaßkanal aufweisenden Gehäuse bekannt. Ein- und Auslaß sind näher ausgebildet. Im Gehäuse befindet sich ein Meßkörper in Form eines Flügelrads. Das Flügelrad ist innerhalb des Gehäuses, wie der Druckschrift zu entnehmen ist, mit sehr geringem Spiel gelagert. Damit dies möglich ist, muß das Flügelrad bei der Montage sehr präzise und genau senkrecht eingeführt werden. Aufgrund der geringen Toleranz wird das Flügelrad an seinem Umfang auch in dieser Position gehalten, so daß das Zusammenfügen der Gehäusehälften ohne Notwendigkeit einer Zentrierung des Flügelrads erfolgen kann.

Nachteilig ist, daß zum Einbringen des Flügelrads aufgrund des geringen Seitenspiels präzise gearbeitet werden muß. Dies kann nur von einer Fachkraft ausgeführt werden und ist mühsam. Dies mag angehen, wenn ein Zusammenfügen nur bei der Montage erforderlich ist, ist aber untragbar, wenn ein solches Meßgerät wiederholt demontiert und zusammengebaut werden muß, um eine Reinigung durchführen zu können.

Aus der DE-OS 23 46 217 ist eine Vorrichtung zur Dosierung von Flüssigkeiten bekannt, bei der mit dem Gehäuse Schnellverschluß-Anschlußnippel verschraubt sind.

Der Erfindung liegt die Aufgabe zugrunde, ein gattungsgemäßes Meßgerät zu schaffen, bei dem unter Vermeidung der genannten Nachteile zum Reinigen eine leichte Demontage und Montage möglich ist.

Erfindungsgemäß wird die genannte Aufgabe bei einem gattungsgemäßen Meßgerät dadurch gelöst, daß fest mit den Zu- und Fortführleitungen für das Getränk verbindbare Zwischenstücke vorgesehen sind, die über an ihnen und am Meßgehäuse vorgesehene Verbindungsteile mit dem Meßgehäuse lösbar verbunden sind, und daß ein Oberteil des Gehäuses an seiner Innenseite mit Abschrägungen versehene Staurippen aufweist, durch die das lediglich mit einem Diamantlager auf einer Spitze im Unterteil des Meßgehäuses gelagerte Flügelrad beim Zusammenfügen von Oberteil und Unterteil des Gehäuses zwangsläufig zentrierbar ist.

Bei dem erfindungsgemäßen Meßgerät ist das Flügelrad lediglich mit einem Diamantlager auf einer Spitze im Unterteil des Meßgehäuses locker einsetzbar. Das Oberteil weist zur Zentrierung des Flügelrades mit Abschrägungen versehene Staurippen auf, durch die das Flügelrad beim Aufsetzen des Oberteils in Position gebracht und die Lagerspitze in das Diamantlager des Oberteils geführt wird. Derart wird das in das Unterteil eingesetzte Flügelrad durch Aufsetzen des Oberteils zentriert und durch das aufgesetzte Oberteil gehalten. Hierdurch kann das Flügelrad lediglich in das Unterteil eingelegt werden. Eine automatische Zentrierung erfolgt durch Aufsetzen und Verschließen des Oberteils. Weiterhin kann das Meßgehäuse auch selbst in wenigen Sekunden aus dem Leitungssystem ausgebaut bzw. in dieses wieder eingebaut werden.

Durch eine äußerst bevorzugte Ausgestaltung ist vorgesehen, daß mit den Verbindungsteilen des Meßgehäuses in Verbindung stehende Verbindungsteile der Zwischenstücke zueinander komplementär ausgebildet sind. Hierbei können dann ebenso schnell die beiden Leitungsenden nach Ausbau des Meßgehäuses schnell zur Reinigung miteinander verbunden werden, ohne daß Querschnittsverminderungen, wie durch das Meßgehäuse selbst, die Reinigung mit Schaumstoffkugeln behindern. Gemäß weiterer Ausgestaltungen ist vorgesehen, daß die Verbindungsteile über Steckkupplungen miteinander verbunden sind oder daß die Verbindungsteile bajonettartige Verschlüsse aufweisen.

Eine äußerst bevorzugte Ausgestaltung sieht vor, daß Ober- und Unterteil des Meßgehäuses durch einen Bajonettverschluß miteinander verbunden sind; hierdurch kann nach erfolgtem Ausbau des Meßgehäuses dieses ebenfalls in einfacher und bequemer Weise geöffnet und damit selbst gereinigt werden.

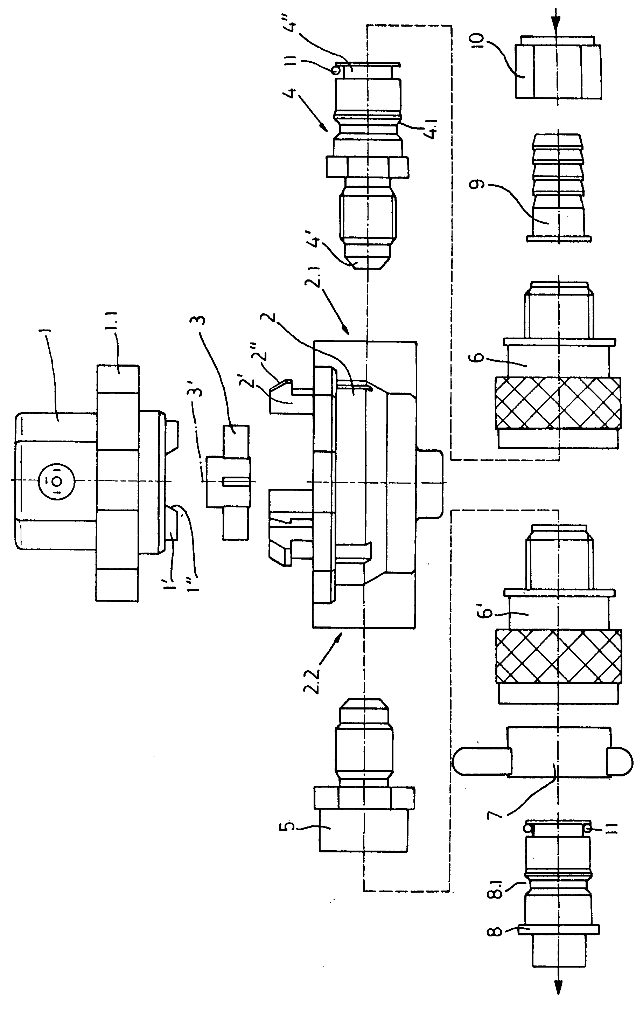

Weitere Vorteile und Merkmale der Neuerung ergeben sich aus den Ansprüchen und aus der nachfolgenden Beschreibung, in der ein Ausführungsbeispiel des erfindungsgemäßen Meßgeräts unter Bezugnahme auf die Zeichnung im einzelnen erläutert ist. Dabei zeigt die einzige Figur:
die bevorzugte Ausführungsform des erfindungsgemäßen Gerätes in auseinandergezogener Darstellung der Einzelteile.

Das erfindungsgemäße Meßgerät weist ein aus einem Oberteil 1 und einem Unterteil 2 bestehendes Meßgehäuse auf, in dem ein Meßflügel drehbar gelagert ist, der durch die durch das Unterteil 2 des Meßgehäuses fließende Flüssigkeit in Drehung versetzt wird und derart über eine Meßelektronik die Messung bewirkt. Der Meßflügel 3 ist lediglich mit einem Diamantlager auf Spitze (im einzelnen nicht dargestellt) in das Unterteil 2 des Meßgehäuses locker eingesetzt und wird durch das aufgesetzte Oberteil 1 gehalten. Zur Zentrierung weist das Oberteil 1 mit Anschrägungen 1'' versehene Staurippen 1' auf, durch die der Meßflügel 3 beim Aufsetzen des Oberteils 1 in Position gebracht und die Lagerspitze 3' ins obere Diamantlager (nicht dargestellt) geführt wird. Zum sicheren Verschließen weist das Unterteil in seinem Randbereich in axialer Richtung hervorstehende Haken 2' auf, die ebenfalls Abschrägungen 2'' aufweisen. Das Oberteil 1 wird mit einem ausgehöhlten ringförmigen Ansatz 1.1 über die Haken 2' geführt, dabei durch die Schrägen 2'' zentriert und durch eine Drehung um einen geringen Winkel von den Haken 2' entsprechend ausgestalteter und zugeordneter Fixierelemente sicher festgelegt. Ober- und Unterteil 1, 2 weisen eine (nicht dargestellte) Ringdichtung auf, mit der der Innenraum des Gehäuses abgedichtet wird.

Das Unterteil 2 des Meßgehäuses weist senkrecht zur Aufsatzrichtung des Oberteils 1 auf das Unterteil 2 miteinander fluchtend eine Einlaßöffnung 2.1 und eine Auslaßöffnung 2.2 auf. In die Einlaßöffnung ist als gehäuseseitiges Verbindungsteil zum Anschluß an eine Getränkeleitung ein Übergangsstück 4 mit einem Düsennippel 4' eingeschraubt, wobei der Düsennippel 4' vor dem Meßflügel 3 angeordnet ist. Auf dem dem Düsennippel 4' gegenüberliegenden Ende 4'' des Übergangsstücks 4 ist mittels Steckkupplung ein Kupplungsteil 6 als schlauchseitiges Verbindungsteil lösbar aufgesetzt, das an seinem gegenüberliegenden Ende mittels eines als Zwischenstück in einem Schlauch im Preßsitz einzusetzenden Schlauchstücks 9 und einer das Schlauchstück durch Verschraubung mit dem Kupplungsteil 6 fest gegen das Kupplungsteil 6 drückenden Überwurfmutter 10 mit dem Schlauch oder der Leitung fest verbunden ist. Durch die Steckkupplungsverbindung zwischen Übergangsstück 4 und Kupplungsteil 6 können diese beiden Teile schnell und bequem gelöst werden.

In das Auslaßende 2.2 des Gehäuseunterteils 2 ist in entsprechender Weise ein weiteres Übergangsstück 5 eingeschraubt, mit dem weiterhin ein dem Kupplungsteil 6 identisches weiteres Kupplungsteil 6' als gehäuseseitiges Verbindungsteil verbunden ist. Das Kupplungsteil 6 ist ebenfalls über eine Steckkupplung und damit schnell und einfach lösbar mit einem Anschlußstück 8 verbunden, das als weiteres Zwischenstück mittels einer Knebelmutter 7 an einer Schankbatterie bzw. entsprechenden Verbindungsstücken einer Schankbatterie befestigbar ist. Die Steckkupplungen der Teile 4, 6, 6' und 8 sind an sich bekannt. Die Teile 6, 6' weisen unter Federdruck stehende Kugeln auf, die in die im Querschnitt konischen Nuten 4.1 bzw. 8.1 der Teile 4, 8 hineingezogen und in diesen Nuten arretiert werden. Durch die konische Ausgestaltung werden die Kupplungen 6, 6' gegen dichtend auf den Teilen 4, 8 einsitzende O-Ringe 11 gedrückt, so daß eine zuverlässige Abdichtung erfolgt. Die O-Ringe 11 sind am Außenumfang der Teile 4, 8 und nicht im Inneren der Kupplungsteile 6, 6' angeordnet, damit sie leicht entfernt und gereinigt werden können.

Sollten die Leitungen gereinigt werden, so werden die Steckkupplungen der Teile 4, 6, 6', 8 gelöst, das Meßgehäuse aus der Leitung herausgenommen und das über die Teile 9, 10 mit dem Schlauch verbundene Kupplungsteil 6 direkt auf das Anschlußstück 8 aufgesteckt. Dann kann die Leitung direkt mechanisch durch Hindurchpressen von Schaumstoffkugeln gereinigt werden. Das Innere des Meßgehäuses 1, 2 selbst wird in der oben beschriebenen Weise auseinandergenommen, separat gereinigt und anschliessend zusammengesetzt, wie oben beschrieben. Nach Reinigen der Leitung wird das erste Kupplungsteil 6 wieder vom Anschlußstück 8 gelöst und das Meßgehäuse wieder in die Leitung eingesetzt, indem das mit dem Schlauch verbundene Kupplungsteil 6 auf das Übergangsstück 4 aufgesetzt wird und das am Meßgehäuse 1, 2 befindliche Kupplungsteil 6' wieder auf das Anschlußstück aufgesteckt wird.

## Patentansprüche

1. Meßgerät zum Einbau in Leitungen für Getränke, insbesondere für Bier, mit einem Meßgehäuse (1,2) mit einem Einlaß (2.1) und einem Auslaß (2.2) für das Getränk, dessen Durchfluß zu messen ist, und mit einem Meßkörper in Form eines mittels zumindestens eines Steinlagers gelagerten Flügelrads (3), dadurch gekennzeichnet, daß fest mit den Zu- und Fortführleitungen für das Getränk verbindbare Zwischenstücke (8, 9, 10) vorgesehen sind, die über an ihnen und am Meßgehäuse (1, 2) vorgesehene Verbindungsteile (4, 6; 5, 6') mit dem Meßgehäuse lösbar verbunden sind, und daß ein Oberteil (1) des Gehäuses an seiner Innenseite mit Abschrägungen (1'') versehene Staurippen (1') aufweist, durch die das lediglich mit einem Diamantlager auf einer Spitze im Unterteil (2) des Meßgehäuses gelagerte Flügelrad (3) beim Zusammenfügen von Oberteil (1) und Unterteil (2) des Gehäuses zwangsläufig zentrierbar ist.

2. Meßgerät nach Anspruch 1, dadurch gekennzeichnet, daß das Unterteil (2) in seinem Randbereich in axialer Richtung vorstehende Haken (2') mit Abschrägungen (2'') aufweist, über die das Oberteil (1) mit einem ausgehöhlten ringförmigen Ansatz (1.1) geführt und durch die Abschrägungen (2'') zentrierbar ist.

3. Meßgerät nach Anspruch 1 oder 2, dadurch gekennzeichnet, daß mit den Verbindungsteilen (4; 5) des Meßgehäuses (1, 2) in Verbindung stehende Verbindungsteile (6, 6') der Zwischenstücke (8, 9, 10) zueinander komplementär ausgebildet sind.

4. Meßgerät nach einem der vorangehenden Ansprüche, dadurch gekennzeichnet, daß die Verbindungsteile (4, 6; 5, 6') Steckkupplungen (4.1, 8.1) zur Verbindung aufweisen.

5. Meßgerät nach einem der Ansprüche 1 bis 3, dadurch gekennzeichnet, daß die Verbindungsteile (4, 6; 5, 6') bajonettartige Verschlüsse aufweisen.

6. Meßgerät nach einem der vorangehenden Ansprüche, dadurch gekennzeichnet, daß die Verbindungsteile (4; 5) des Meßgehäuses (1, 2) mit diesem verschraubt sind.

7. Meßgerät nach einem der vorangehenden Ansprüche, dadurch gekennzeichnet, daß Ober- und Unterteil (1, 2) des Meßgehäuses durch einen Bajonettverschluß miteinander verbunden sind.

## Claims

1. Measuring device for fitting in beverage and in particular beer conduits, with a measuring casing (1,2) having an inlet (2.1) and an outlet (2.2) for the beverage, whose flow is to be measured, and which has a measuring body in the form of a worm wheel (3) mounted by means of at least one jeweled bearing, characterized in that there are intermediate pieces (8,9,10) firmly connectable to the supply and discharge conduits for the beverage and which are detachably connected to the measuring casing (1,2) by means of connecting parts provided on the latter and on the intermediate pieces and that an upper part (1) of the casing is provided on its inside with retaining ribs (1') having bevels (1'') and by means of which the worm wheel (3) mounted solely with a diamond bearing on a point in the lower part (2) of the measuring casing is forcibly centered on joining together the upper part (1) and lower part (2) of the casing.

2. Measuring device according to claim 1, characterized in that in its marginal area the lower part (2) has axially projecting hooks (2') with bevels (2''), by means of which the upper part (1) is guided with a hollowed out, annular shoulder (1.1) and can be centered by means of the bevels (2,2'').

3. Measuring device according to claim 1 or 2, characterized in that connecting parts (6,6') of the intermediate pieces (8,9,10) in connection with the connecting parts (4,5) of the measuring casing (1,2) are constructed in complementary manner to one another.

4. Measuring device according to one of the preceding claims, characterized in that the connecting parts (4,6;5,6') have plug couplings (4.1,8.1) for connection purposes.

5. Measuring device according to one of the claims 1 to 3, characterized in that the connecting parts (4,6;5,6') have bayonet-like catches.

6. Measuring device according to one of the preceding claims, characterized in that the connecting parts (4,5) of the measuring casing (1,2) are screwed to the latter.

7. Measuring device according to one of the preceding claims, characterized in that the upper and lower parts (1,2) of the measuring casing are interconnected by a bayonet catch.

## Revendications

1. Dispositif de mesure à monter sur des tuyauteries de boissons, notamment de bière, comprenant un boîtier de mesure (1,2) présentant une entrée (2.1) et une sortie (2.2) pour la boisson, dont on veut mesurer le débit, et comprenant un élément de mesure en forme d'une hélice (3) montée à rotation par l'intermédiaire d'au moins un palier, caractérisé en ce que sont prévues des pièces intermédiaires (8,9,10) pouvant être raccordées de façon solidaire aux tuyauteries d'amenée et d'évacuation de la boisson, ces pièces intermédiaires étant raccordées de façon amovible au boîtier de mesure par l'intermédiaire de parties de raccordement (4,6 ; 5,6') prévues sur elles et sur le boîtier de mesure (1,2), et en ce qu'un élément supérieur (1) du boîtier présente des nervures de retenue (1') munies de chanfreins (1''), par lesquelles l'hélice, qui est montée à rotation par un seul palier à diamant sur une pointe de l'élément inférieur (2) du boîtier de mesure, peut être centrée automatiquement lorsqu'on réunit les éléments supérieur (1) et inférieur (2) du boîtier.

2. Dispositif de mesure selon la revendication 1, caractérisé en ce que l'élément inférieur (2) présente au niveau de sa bordure des crochets (2') munis de chanfreins (2'') disposés en direction axiale, par l'intermédiaire desquels l'élément supérieur (1) présentant une saillie (1.1) en forme d'anneau évidé est conduit et peut être centré grâce aux chanfreins (2'').

3. Dispositif de mesure selon l'une des revendications 1 ou 2, caractérisé en ce que les parties de raccordement (6,6') des pièces intermédiaires (8,9,10) reliées aux parties de raccordement (4 ; 5) du boîtier de mesure (1.2) sont conformées de manière complémentaire.

4. Dispositif de mesure selon l'une quelconque des revendications précédentes, caractérisé en ce que les parties de raccordement (4,6 ; 5,6') présentent pour le raccordement des dispositifs d'accouplement par emboîtement (4.1, 8.1).

5. Dispositif de mesure selon l'une des revendications 1 à 3, caractérisé en ce que les parties de raccordement (4,6 ; 5,6') présentent des accouplements à baïonnette.

6. Dispositif selon l'une quelconque des revendications précédentes, caractérisé en ce que les parties de raccordement (4 ; 5) du boîtier de mesure (1,2) sont vissées sur celui-ci.

7. Dispositif selon l'une quelconque des revendications précédentes, caractérisé en ce que les éléments supérieur et inférieur (1,2) du boîtier de mesure sont raccordés par un accouplement à baïonnette.
